(19) Europäisches Patentamt
European Patent Office
Office européen des brevets

(11) EP 0 894 803 B1

(12) **EUROPÄISCHE PATENTSCHRIFT**

(45) Veröffentlichungstag und Bekanntmachung des Hinweises auf die Patenterteilung:
**15.01.2003 Patentblatt 2003/03**

(51) Int Cl.[7]: **C07F 7/18**

(21) Anmeldenummer: **98112124.7**

(22) Anmeldetag: **01.07.1998**

(54) **Mischungen, bestehend aus Bis(silylorganyl)polysulfanen und Silylorganylthiocyanaten, ihre Herstellung und Verwendung**

Mixtures of bis(silylorganyl)polysulfanes and silylorganylthiocyanates, their preparation and use

Mélanges de bis (silylorganyl)polysulfanes et silylorganylthiocyanures, leur préparation et leur utilisation

(84) Benannte Vertragsstaaten:
**AT BE CH DE DK ES FI FR GB GR IE IT LI LU NL PT SE**

(30) Priorität: **30.07.1997 DE 19732725**

(43) Veröffentlichungstag der Anmeldung:
**03.02.1999 Patentblatt 1999/05**

(73) Patentinhaber: **Degussa AG**
**40474 Düsseldorf (DE)**

(72) Erfinder:
- **Göbel, Thomas, Dr.**
  **63457 Hanau (DE)**
- **Deschler, Ulrich, Dr.**
  **63877 Sailauf (DE)**
- **Münzenberg, Jörg, Dr.**
  **63457 Hanau (DE)**
- **Zezulka, Gerd**
  **63457 Hanau (DE)**

(56) Entgegenhaltungen:
**EP-A- 0 773 224** **DE-C- 3 744 211**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Mischungen, bestehend aus Bis(silylorganyl)polysulfanen und Silylorganylthiocyanaten,ihre Herstellung und die Verwendung in Gummimischungen.

Trialkoxysilylpropylpolysulfane sind ausgezeichnete Phasenvermittler für den Einbau von oxidischen Materialien in Kautschukmatrices. Insbesondere in der Reifenindustrie findet das Bis(triethoxysilylpropyltetrasulfan ($[(C_2H_5O)_3Si(CH_2)_3]_2S_4$) breite Anwendung in kieselsäureverstärkten Reifen. Es kommt dabei zu einer Anbindung des Silans an freie Hydroxylgruppen der Kieselsäure auf der einen Seite und zu einer vulkanisationsartigen Vernetzung mit dem Kautschuk auf der anderen. Für spezielle Anwendungen ist es sinnvoll, das Silan nicht mit einer Tetrasulfan- sondern einer weniger reaktiven Disulfanfunktion auszustatten.
Die Synthese von Silylalkyldisulfanen wird zusammen mit denen entsprechender Polysulfane in verschiedenen Patenten und Veröffentlichungen beschrieben.

Die DE-PS 2 405758 und die DE-PS 2 542534 betreffen die Herstellung ausgehend von Mercaptoalkylsilanen und Schwefel, bei der Schwefelwasserstoff freigesetzt wird.

Mehrere Herstellungsmethoden gehen von in situ erzeugten Disulfiden aus, mit denen dann nucleophile Substitutionen an Halogenalkylsilanen durchgeführt werden. Diese Verfahren unterscheiden sich nur in der Synthese des Nucleophils Disulfid. Gemäß DE-PS 3 311340 wird das Disulfid durch Reaktionen zwischen Hydrogensulfid, Natrium und Schwefel in Ethanol erzeugt.

Gemäß US-PS 5,405,985 wird eine wäßrige Natriumsulfidlösung zusammen mit Schwefel zur Darstellung benutzt. Fachleuten ist hinreichend bekannt, daß bei Reaktionen zwischen Sulfiden und Schwefel Gemische unterschiedlicher Polysulfide entstehen, so daß bei der nucleophilen Substitution wiederum nur ein Gemisch von Polysulfanen verschiedener Kettenlänge resultieren kann. Gleiches gilt für Reaktionen zwischen Mercaptanen bzw. Thiolaten und Schwefel. Es ist außerdem bekannt, daß aus diesen Produktgemischen die entsprechenden Disulfane nur unter großen Schwierigkeiten isoliert werden können.

In der DE-PS 2 360470 wird zwar ein Weg zur Herstellung von reinem Bis(silylalkyl)disulfan durch Oxidation des entsprechenden Mercaptans mit Sulfurylchlorid beschrieben, doch entstehen bei dieser Methode stark korrosive Nebenprodukte ($SO_2$, HCl). Nebenreaktionen am Silylrest führen außerdem zu einer Verminderung der Ausbeute am erwünschten Produkt (Beispiel: 63,3 %).Eine weitere oxidative Variante findet sich in der EP-A1 217178. Hier werden entsprechende Thiolate durch Jod zu den Disulfiden oxidiert. Der Prozeß erfordert nach der aufwendigen Herstellung des Silylalkylmercaptans zwei weitere Reaktionsschritte.

In der nicht vorveröffentlichten DE-PS 195 41404.7 wird ein Verfahren zur selektiven Synthese von Silylalkyldisulfanen beschrieben.
Man setzt dabei Polysulfane zur Desulfurierung mit nucleophilen Reagentien, wie z. B. NaCN um.
Ein Nachteil dieser Umsetzung besteht jedoch darin, daß pro Mol der zu entfernenden Schwefelatome durch die Umsetzung mit NaCN ein Mol NaSCN entsteht.
Dieses ist nur umständlich abzutrennen und muß dann entsorgt werden.
Die Aufgabe der Erfindung besteht vor allem darin, den Zwangsanfall an NaSCN zu vermeiden.

Gegenstand der Erfindung sind Mischungen, bestehend aus Bis(silylorganyl)polysulfanen und Silylorganylthiocyanaten der allgemeinen Formel

$$(R^1R^2R^3SiR^4)_x\ X \qquad (I),$$

in der bedeuten:

X : $S_n$ mit n= einer ganzen Zahl von 2 bis 20, insbesondere von 2 bis 8, wenn x = 2 und

X: SCN, wenn x = 1,

$R^1$, $R^2$, $R^3$: gleich oder verschieden voneinander, verzweigt oder unverzweigt, Alkyl - und/oder Alkoxygruppen mit einer Kettenlänge von 1 bis 8 C-Atomen, bevorzugt 1 -3 C-Atomen, mit der Maßgabe, daß $R^1$, $R^2$, $R^3$ mindestens einmal für eine, bevorzugt drei Alkoxygruppe stehen, Wasserstoff oder einwertiger Arylrest, insbesondere Phenyl, Toluyl, Benzyl

$R^4$: zweiwertiger Alkylidenrest mit einer Kettenlänge von 1 bis 8 C-Atomen, bevorzugt 2 bis 4 C-Atomen oder

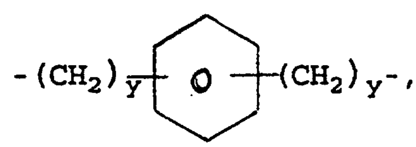

y = 1 bis 4

Bevorzugt werden Mischungen, die aus Polysulfanen und Thiocyanaten gemäß Formel (I) bestehen und, in denen $R^1$, $R^2$, $R^3$ $R^4$ in beiden Verbindungen dieselben Bedeutungen haben, ohne untereinander gleich sein zu müssen.

Polysulfane und Thiocyanate gemäß Formel (I) liegen bevorzugt in einem Molverhältnis von 1:20 bis 20:1 vor. Besonders bevorzugt sind Mischungen, die aus Bis(trialkoxysilypropyl)disulfanen und Thiocyanatopropyltrialkoxysilanen bestehen, insbesondere die Methoxyoder Ethoxyverbindungen.

Geringe Mengen an Verbindungen gemäß Formel (IV) werden hier nicht berücksichtigt.

Die erfindungsgemäßen Mischungen eigenen sich insbesondere für die Verbesserung der anwendungstechnischen Eigenschaften von mit Füllstoff, insbesondere Kieselsäure, verstärkten Kunststoff- und Kautschukmischungen.

Diese Mischung stellt erstmals eine Kombination von auf dem Kautschuksektor nur in Einzelanwendung bekannten Organosiliciumverbindungen dar.

Während diese bisher als Konkurrenten verstanden wurden (EP-A-0764 687), finden sich bei der kombinierten Anwendung Disulfanen und Thiocyanatosilanen überraschende Ergebnisse.

Gegenstand der Erfindung ist ebenso ein Verfahren zur Herstellung von Mischungen gemäß den Ansprüchen 1 bis 4, das dadurch gekennzeichnet ist,daß man Silylorganylpolysulfane oder deren Gemische gemäß der allgemeinen Formel

$$(R^1\ R^2R^3SiR^4)_2S_n \qquad (II),$$

in der $R^1$, $R^2$, $R^3$ und $R^4$ und n (ohne n=2) die Bedeutung aus Formel (I) besitzen, mit einer nucleophilen Verbindung der allgemeinen Formel

$$M^+\ CN^- \qquad (III)$$

in der bedeutet:

> $M^+$ ein Alkalikation,insbesondere $Na^+$, ein substituiertes oder unsubstituiertes Ammoniumion oder ein halbes Erdalkali- oder Zinkion, umsetzt, wobei man die Verbindungen gemäß der allgemeinen Formel (III)bevorzugt äquimolar zur Zahl der aus der Verbindung gemäß der allgemeinen Formel (II) zu entfernenden Schwefelatome einsetzt, dieses Reaktionsgemisch mit einer Verbindung der allgemeinen Formel

$$R^1\ R^2\ R^3Si\text{-}R^4\text{-}Cl \qquad (IV),$$

in der $R^1$, $R^2$, $R^3$, $R^4$ die Bedeutung aus Formel (I) besitzen,im Molverhältnis von 0,05:1 bis 1.0:1, bezogen auf die Verbindung gemäß Formel (III) bei erhöhter Temperatur unter Druck umsetzt und nach der Umsetzung die Mischung der gewünschten Verbindung abtrennt.

Als Nebenprodukt entsteht hierbei nur NaCl, das problemlos abzutrennen und zu entsorgen ist.

Nicht umgesetzte Mengen an Verbindungen gemäß Formel (IV) stören bei der weiteren Verwendung der Mischungen nicht und sind gegebenenfalls Bestandteile der erfindungsgemäßen Mischungen.

Das Verfahren kann sowohl in einem lösungsmittelfreien System als auch unter Zusatz von Lösungsmitteln durchgeführt werden. Bevorzugt werden solche, in denen die eingesetzte nucleophile Verbindung wenigstens teilweise löslich ist.

Aliphatische Lösungsmittel, wie z. B. Pentan, Hexan oder Gemische verschiedener verzweigter und unverzweigter Alkane oder aromatische Lösungsmittel, wie z. B. Benzol, Toluol oder Xylol oder Ether, wie z. B. Diethylether, Dibenzylether, Methyl-tert.-butylether sind verwendbar.

Vorzugsweise kommt als organisches Lösungsmittel ein linearer oder verzweigter Alkohol mit 1-8 C-Atomen, wie z. B. Methyl-, Ethyl-, Propyl-, Butyl- oder Pentylalkohol zum Einsatz. Geeignet sind auch Cycloalkylalkohole mit 5-8 C-Atomen, Phenol oder Benzylalkohol.

Sinnvollerweise wird, um z. B. eine Umesterung zu vermeiden, der jeweils zur Gruppe $R^1$, $R^2$, $R^3$ (Alkoxy) korrespondierende Alkohol verwendet. Gegebenenfalls kann auch die Verwendung eines Gemischs dieser Alkohole von Vorteil sein, z. B. wenn $R^1$, $R^2$, $R^3$ in einer Verbindung unterschiedliche Bedeutungen besitzen.

Die Umsetzung zum Thiocyanatosilan wird vorteilhaft bei einer Temperatur von 20 ° C bis Siedetemperatur des/der eingesetzten Lösungsmittel, bevorzugt unter Druck, durchgeführt. Dieser beträgt 1000 bis 5000 hpa, bevorzugt 1500 bis 3500 hpa.

In einer vorteilhaften Ausführungsform setzt man ein Tetrasulfan gemäß Formel (II)bzw. ein Gemisch von Polysulfanen gemäß Formel (II), deren statistischer Schwefel-Mittelwert einem Tetrasulfan entspricht, mit einem Cyanid gemäß Formel (III) zu einem Disulfan um und läßt das entstandene Thiocyanatsalz wie beschrieben mit der ausreichenden Menge der-Verbindung gemäß Formel (IV)zu der gewünschten Mischung abreagieren. Dieses enthält dann bevorzugt ein Disulfan und ein Silylorganylthiocyanat im Molverhältnis von 1:2.

Es wurde auch gefunden, daß das Polysulfan, insbesondere das Tetrasulfan, gemäß Formel (II) nicht separat hergestellt werden muß, um es anschließend in dem Verfahren zur Herstellung der erfindungsgemäßen Mischungen einsetzen zu können.

Es gelingt vielmehr, ein "in situ"-Verfahren zu nutzen. Das bedeutet, daß man das desulfurierte Organosilan nicht getrennt herstellt, sondern "in situ" erzeugt und gleich weiterreagieren läßt (Eintopfreaktion).

Um die erfindungsgemäßen Mischungen zu erhalten, sind dann nur noch das gegebenenfalls eingesetzte Lösungsmittel und das entstandene NaCl abzutrennen.

Zu diesem Zweck stellt man bevorzugt Lösungen in einem organischen Lösungsmittel, gegebenenfalls Suspensionen her, die

> a) Silylorganylpolysulfane oder deren Gemische gemäß Formel (II),
>
> b) eine nucleophile Verbindung der allgemeinen

Formel

$$M^+ CN^- \quad (III)$$

und

c) eine Organosiliciumverbindung der allgemeinen Formel

$$Cl\text{-}R^4\text{-}SiR^1R^2R^3 \quad (IV),$$

in einem molaren Verhältnis von a:b:c von (n-2):k(n-2): m (n-2) enthalten, wobei
$0<k \leq 1$; $k \cdot 0,05 \leq m \leq k$; $n > 2$ entsprechen und ansonsten die Bedeutungen wie oben gelten.

Die Reaktion wird bevorzugt temperaturgesteuert geführt. Dies bedeutet, daß man anfangs einen Temperaturbereich von 30 bis 85 °C einhält, und nach der Desulfurierung die Temperatur erhöht, so daß die erfindungsgemäßen Mischungen gebildet werden.
Dieser Bereich liegt insbesondere zwischen 90 und 150° C bei einem Druck von 1000 bis 5000 hpa.

Die erfindungsgemäßen Verfahren gestatten es, die Zusammensetzung der Mischungen im breiten Umfang zu variieren.

Es können sowohl die $S_n$-Gruppen gemäß Formel (I) als auch die infolge der Desulfurierung und der sich anschließenden Umsetzung des entstandenen Alkalithiocyanats mit der Verbindung gemäß Formel (IV) zu bildende Menge an Thiocyanatosilan nach Wunsch eingestellt werden.

Dies hängt davon ab, welche Eigenschaften das unter Verwendung der erfindungsgemäßen Mischungen hergestellte Vulkanisat besitzen soll oder unter welchen Bedingungen die Vulkanisation stattfinden soll.

Es ist nämlich bekannt, daß z. B. die Zahl der Schwefelatome in den Polysulfanen das Scorch-Verhalten von insbesondere mit Schwefel oder Schwefelverbindungen vulkanisierbaren Kautschukmischungen stark beeinflussen.

Aus diesem Grund ist es manchmal sinnvoll, Disulfane und/oder Thiocyanatosilane der genannten Formeln den so hergestellten Mischungen zuzusetzen oder dies bei der Herstellung von vulkanisierbaren Kautschukmischungen zu tun, wenn es die gewünschten Eigenschaften des Vulkanisats erforderlich erscheinen lassen.

Die erfindungsgemäßen Mischungen werden vorzugsweise vor dem Einmischen in die Kautschukmischungen mit der Kieselsäure gemischt oder auch zur Reaktion gebracht, wie z. B. in der US-PS 5,116,886 (EP-B 0442 143) beschrieben.

Geringe Mengen an nicht umgesetzten Verbindungen gemäß Formel (IV) wirken sich nicht nachteilig auf die Eigenschaften der Vulkanisate aus.

Es ist nicht unbedingt erforderlich, die gesamte verwendete Kieselsäuremenge vorab mit einer der erfindungsgemäßen Mischungen zu modifizieren. Es ist auch möglich, nur einen Mischungen zu modifizieren. Es ist auch möglich, nur einen Teil vorab zu modifizierten und den Rest ohne vorherige Modifizierung einzusetzen, und die restliche Menge der Mischung anschließend dem Kautschuk beizumischen.

Ist Ruß als weiterer Füllstoff für die herzustellende Kautschukmischung vorgesehen, besteht in einer anderen Variante die Möglichkeit, die Organosilanmischung ganz oder zum Teil als Abmischung mit Ruß einzusetzen. Diese wird dann vorzugsweise in Form eines Granulats mit einem Gehalt von 30 bis 60 Gew.-% an Organosilanen bzw. 70 bis 40 Gew.-% Ruß verwendet. Die Herstellung ähnlicher Granulate wird in der DE-PS 2747 277 (US-PS 4,128,438) beschrieben und kann hier analog durchgeführt werden.

Als besonders vorteilhaft hat sich die Verwendung von erfindungsgemäßen Organosilangemischen mit einer Gewichtsverteilung von 60 : 40 bis 90 : 10, bevorzugt 75 : 25 bis 85 : 15 (Disulfan : Thiocyanatosilan), insbesondere ca. 80 : 20 erwiesen.

Verglichen mit den Eigenschaften von Vulkanisaten, die unter Verwendung von Disulfanen als alleiniger siliciumorganischer Verbindung hergestellt werden, zeigen sich insbesondere Vulkanisate, zu deren Herstellung die oben genannten Mischungen verwendet werden, im Hinblick auf den Modul (DIN 53504), den Abriebwiderstand (DIN 53516), den Heat build-up (ASTM D 623 A) und den Verlustfaktor tan $\delta$ bei 60 ° C (DIN 53 513) als überlegen.

Beispiele

Beispiel 1

Herstellung einer Mischung aus Disulfan und Thiocyanatosilan

In einer Glasapparatur bestehend aus einem 1 1 Dreihalskolben mit Rückflußkühler werden 137,4 g (0,25 mol) Bis(3,3'-triethoxysilylpropyl)tetrasulfan in 150 ml Ethanol mit 23,28 g (048 mol) Natriumcyanid unter Rückfluß umgesetzt. Nach 3 h Rühren unter Rückfluß wird das Reaktionsgemisch abgekühlt und in einen Autoklaven überführt. Der Reaktionskolben wird mit 50 ml Ethanol gespült und die Spüllösung zusammen mit 102,34 g (0,43 mol) 3-Chlorpropyltriethoxysilan dem Autoklaveninhalt zugegeben. Nach Verschließen des Autoklaven wird 7 h auf 120 ° C erhitzt. Nach Abkühlen des Autoklaveninhalts auf Raumtemperatur wird das entstandene Produktgemisch filtriert und vom Filtrat im Vakuum von 15 mbar das Lösungsmittel abgezogen. Der Rückstand enthält nach dem $^1$H-NMR-Spektrum ein Gemisch gummireaktiver Silane (Bis(3,3'-triethoxysilylpropyl)polysulfane und 3-Thiocyanatopropyltriethoxysilan in einer Ausbeute von 82 %.

Folgende Verteilung ergibt sich:

| | |
|---|---|
| Disulfan | 73 Gew.-% |
| Thiocyanatosilan | 18 Gew.-% |
| Chlorpropylsilan | 9 Gew.-% |

Beispiel 2

Herstellung einer Mischung aus Disulfan und Thiocyanatosilan (Eintopfreaktion)

In einem Autoklaven mit 500 ml Inhalt wird ein Gemisch aus 137,4 g (0,25 mol) Bis(3,3'-triethoxysilylpropyl)-tetrasulfan, 23,28 g (0,48 mol) Natriumcyanid und 102,34 g (0,43 mol) 3-Chlorpropyltriethoxysilan in 200 ml Ethanol vorgelegt. Man erhitzt 3 h auf 85 °C und anschließend 8 h auf 120 ° C und kühlt nach der Reaktionszeit ab. Das Reaktionsgemisch wird filtriert, vom Filtrat das Lösungsmittel im Vakuum (15 mbar) entfernt und der Rückstand mit $^1$H-NMR-Spektrum untersucht. Man erhält ein Gemisch gummireaktiver Silane in einer Ausbeute von 76 %.

Folgende Verteilung ergibt sich:

| | |
|---|---|
| Disulfan | 76 Gew.-% |
| Thiocyanatosilan | 12 Gew.-% |

**Patentansprüche**

**1.** Mischungen, bestehend aus Bis(silylorganyl)polysulfanen und Silylorganylthiocyanaten der allgemeinen Formel

$$(R^1R^2R^3SiR^4)_x\ X \qquad (I),$$

in der bedeuten:

X : $S_n$ mit n= einer ganzen Zahl von 2 bis 20, insbesondere von 2 bis 8, wenn x = 2

und

X: SCN, wenn x = 1, (Thiocyanatosilan),

$R^1$, $R^2$, $R^3$: gleich oder verschieden voneinander, verzweigt oder unverzweigt, Alkyl- und/oder Alkoxygruppen mit einer Kettenlänge von 1 bis 8 C-Atomen, mit der Maßgabe, daß $R^1$, $R^2$, $R^3$ mindestens einmal für eine Alkoxygruppe stehen, Wasserstoff oder einwertiger Arylrest, insbesondere Phenyl, Toluyl, Benzyl

$R^4$: zweiwertiger Alkylidenrest mit einer Kettenlänge von 1 bis 8 C-Atomen, bevorzugt 2 bis 4 C-Atomen oder

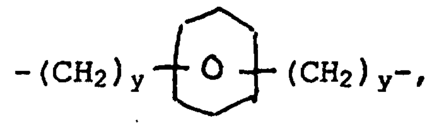

mit y = 1 bis 4

**2.** Mischungen gemäß Anspruch 1, die aus Polysulfanen und Thiocyanaten gemäß Formel (I) bestehen, und in denen $R^1$, $R^2$, $R^3$ und $R^4$ in beiden Verbindungen dieselben Bedeutungen haben, ohne untereinander gleich sein zu müssen.

**3.** Mischungen gemäß den Ansprüchen 1 oder 2 die aus Polysulfanen und Thiocyanaten gemäß Formel (I) in einem Molverhältnis von 1:20 bis 20:1 bestehen.

**4.** Mischung, bestehend aus Bis(trialkoxysilylpropyl) disulfan und Thiocyanatopropyltrialkoxysilan in einem Gewichtsverhältnis von 60 : 40 bis 90 : 10. .

**5.** Mischungen gemäß den Ansprüchen 1 bis 4 die zusätzlich Kieselsäure und/oder Ruß in einer Menge von 5 bis 95 Gew.-% enthalten.

**6.** Verfahren zur Herstellung von Mischungen gemäß den Ansprüchen 1 bis 4,
**dadurch gekennzeichnet,**
**daß** man Silylorganylpolysulfane oder deren Gemische gemäß der allgemeinen Formel

$$(R^1\ R^2R^3SiR^4)_2S_n \qquad (II),$$

in der $R^1$, $R^2$, $R^3$ und $R^4$ und n (ohne n=2) die Bedeutung aus Formel (I) besitzen,
mit einer nucleophilen Verbindung der allgemeinen Formel

$$M^+\ CN^- \qquad (III)$$

in der bedeutet:
$M^+$ ein Alkalikation, ein substituiertes oder unsubstituiertes Ammoniumion oder ein halbes Erdalkalioder Zinkion, umsetzt, wobei man die Verbindungen, gemäß der allgemeinen Formel (III) äquimolar zur Zahl der aus der Verbindung gemäß der allgemeinen Formel (II) zu entfernenden Schwefelatome einsetzt, dieses Reaktions-gemisch mit einer Ver-

bindung der allgemeinen Formel

$$R^1 R^2 R^3Si\text{-}R^4\text{-}Cl \quad (IV),$$

in der $R^1$, $R^2$, $R^3$, $R^4$ die Bedeutung aus Formel (I) besitzen, im Molverhältnis von 0,05:1 bis 1,0:1, bezogen auf die Verbindung gemäß Formel (III) bei erhöhter Temperatur unter Druck umsetzt und nach der Umsetzung die Mischung der gewünschten Verbindungen abtrennt.

**7.** Verfahren gemäß Anspruch 6,
**dadurch gekennzeichnet,**
**daß** man die Verbindungen gemäß den Formeln (II), (III), und (IV) in den gewünschten Molverhältnissen miteinander mischt, unter Druck bei erhöhter Temperatur umsetzt und die Mischung der gewünschten Verbindungen abtrennt.

**8.** Verfahren gemäß Anspruch 6,
**dadurch gekennzeichnet,**
**daß** man Mischungen von

a) Silylorganylpolysulfanen oder deren Gemischen gemäß der allgemeinen Formel (II) und der Verbindung
b)

$$M^+ CN^- \quad (III)$$

und
c) einer Organosilicumverbindung der allgemeinen Formel

$$R^1 R^2 R^3Si\text{-}R^4\text{-}Cl \quad (IV),$$

herstellt, in dem a : b : c in einem molaren Verhältnis von (n-2): k(n-2): m (n-2) vorliegen, wobei $0<k \leq 1$; $k \cdot 0{,}05 \leq m \leq k$; $n >2$ entsprechen und ansonsten die Bedeutungen wie oben gelten, man diese als Lösung oder Suspension vorliegenden Mischungen bei einer Temperatur von 30 bis 85° C umsetzt, anschließend bei erhöhter Temperatur und unter Druck die Umsetzung zu der gewünschten Mischung ablaufen läßt und diese isoliert.

**9.** Verfahren gemäß den Ansprüchen 6 oder 7,
**dadurch gekennzeichnet,**
**daß** man ein Tetrasulfan oder eine Verbindung, in der das statistische Mittel von n vier entspricht, einsetzt.

**10.** Verfahren gemäß den Ansprüchen 6 oder 7,
**dadurch gekennzeichnet,**
**daß** man ein Polysulfan oder ein Gemisch von Polysulfanen gemäß Formel (II) zu dem entsprechenden Disulfan umsetzt.

**11.** Verfahren zur Herstellung vulkanisierbarer mit Kieselsäure und gegebenfalls Ruß verstärkten Kunststoff- und Kautschukmischungen,
**dadurch gekennzeichnet,**
**daß** man die Mischungen gemäß den Ansprüchen 1 bis 5 in die Kunststoff- und Kautschukmischungen einmischt.

**12.** Verfahren gemäß Anspruch 11,
**dadurch gekennzeichnet,**
**daß** man eine Mischung, bestehend aus Bis(trialkoxysilyl-propyl)disulfan und Thiocyanatopropyltrialkoxysilan mit einem Gewichtsverhältnis von 60 : 40 bis 90 : 10, bevorzugt 75 : 25 bis 85 : 15 einsetzt.

**13.** Verfahren gemäß Anspruch 11,
**dadurch gekennzeichnet,**
**daß** man den Mischungen gemäß den Ansprüchen 1 bis 5 ein Disulfan gemäß Formel (II) und/oder ein Thiocyanatosilan gemäß Formel (I) (Bedeutung von X : SCN, x = 1) beimengt.

**Revendications**

**1.** Mélanges constitués de bis(silylorganyl)polysulfanes et de silylorganylthiocyanates de formule générale

$$(R^1R^2R^3SiR^4)_x\ X \quad (I)$$

dans laquelle:

| | |
|---|---|
| X représente: | $S_n$ où n est un nombre entier allant de 2 à 20, en particulier de 2 à 8, lorsque x = 2 et |
| X représente: | SCN lorsque x = 1, |
| $R^1$, $R^2$, $R^3$: | identiques ou différents les uns des autres, représentent des groupes alkyle et/ou alcoxy ramifiés ou non ramifiés, ayant une longueur de chaîne de 1 à 8 atomes de carbone, étant entendu que $R^1$, $R^2$ et $R^3$ représentent au moins une fois un groupe alcoxy, un atome d'hydrogène ou un radical aryle monovalent, en particulier phényle, toluyle, benzyle, |
| $R^4$ : | représente un radical alkylidène divalent ayant une longueur de chaîne de 1 à 8 ato- |

mes de carbone, de 2 à 4 atomes de carbone, ou

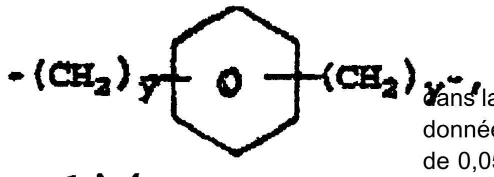

y = 1 à 4

avec y = 1 à 4.

2. Mélanges selon la revendication 1, qui sont constitués de polysulfanes et de thiocyanates de formule (I), et dans lesquels $R^1$, $R^2$, $R^3$ et $R^4$ ont les mêmes significations dans les deux composés, sans devoir être identiques entre eux.

3. Mélanges selon la revendication 1 ou 2, qui sont constitués de polysulfanes et de thiocyanates de formule (I) en un rapport molaire de 1:20 à 20:1.

4. Mélange constitué de bis(trialcoxysilylpropyl)disulfane et de thiocyanatopropyltrialcoxysilane en un rapport pondéral de 60:40 à 90:10.

5. Mélanges selon les revendications 1 à 4, qui contiennent en outre de l'acide silicique et/ou du noir de carbone en une quantité de 5 à 95 % en poids.

6. Procédé pour la préparation de mélanges selon les revendications 1 à 4,
**caractérisé en ce que**
on fait réagir des silylorganylpolysulfanes ou des mélanges de ceux-ci, de formule générale

$$(R^1 R^2 R^3 SiR^4)_2 S_n \qquad (II),$$

dans laquelle $R^1$, $R^2$, $R^3$ et $R^4$ et n (hormis n = 2) ont les significations données pour la formule (I), avec un composé nucléophile de formule générale

$$M^+ CN^- \qquad (III),$$

dans laquelle:

$M^+$ représente un cation alcalin, un ion ammonium substitué ou non substitué ou un demi-ion alcalino-terreux ou zinc, en utilisant les composés de formule générale (III) en quantité équimolaire par rapport au nombre des atomes de soufre à éliminer du composé de formule générale (II), on fait réagir sous pression et à une température élevée ce mélange réactionnel avec un composé de formule générale

$$R^1 R^2 R^3 Si\text{-}R^4\text{-}Cl \qquad (IV),$$

dans laquelle $R^1$, $R^2$, $R^3$ et $R^4$ ont les significations données pour la formule (I), en un rapport molaire de 0,05:1 à 1,0:1, par rapport au composé de formule (III), et, après la réaction, on sépare le mélange du composé désiré.

7. Procédé selon la revendication 6,
**caractérisé en ce que**
on mélange entre eux les composés de formule (II), (III), et (IV) en les rapports molaires désirés, sous pression et à haute température, et on sépare le mélange des composés recherchés.

8. Procédé selon la revendication 6,
**caractérisé en ce qu'**
on prépare des mélanges de

a) silylorganylpolysulfanes ou des mélanges de ceux-ci de formule générale (II),
et le composé
b)

$$M^+ CN^- \qquad (III)$$

et
c) un composé organosilicié de formule générale

$$R^1R^2R^3Si\text{-}R^4\text{-}Cl \qquad (IV),$$

dans lequel a:b:c sont présents en un rapport molaire de (n-2):k(n-2):m(n-2), où $0<k\leq 1$; $k.0{,}05\leq m\leq k$; $n>2$ et par ailleurs les conditions sont telles que données ci-dessus, ont fait réagir à une température de 30 à 85°C ces mélanges se trouvant sous forme de solution ou de suspension, puis on laisse se dérouler la réaction à température élevée et sous pression, pour obtenir le mélange désiré, et on isole ce dernier.

9. Procédé selon la revendication 6 ou 7,
**caractérisé en ce que**
on utilise un tétrasulfane ou un composé dans lequel la moyenne statistique de n est égale à 4.

10. Procédé selon la revendication 6 ou 7,
**caractérisé en ce que**
un polysulfane ou un mélange de polysulfanes de formule (II) est converti en le disulfane correspondant.

**11.** Procédé pour la préparation de compositions de caoutchoucs et de matières plastique vulcanisables, renforcées avec de l'acide silicique et éventuellement du noir de carbone,
**caractérisé en ce que**
les mélanges selon les revendications 1 à 5 sont incorporés dans les compositions de caoutchoucs et de matières plastique.

**12.** Procédé selon la revendication 11,
**caractérisé en ce que**
on utilise un mélange constitué de bis(trialcoxysilylpropyl)disulfane et de thiocyanatopropyltrialcoxysilane ayant un rapport pondéral de 60:40 à 90:10, de préférence de 75:25 à 85:15.

**13.** Procédé selon la revendication 11,
**caractérisé en ce que**
on ajoute aux mélanges selon les revendications1 à 5 un disulfane de formule (II) et/ou un thiocyanatosilane de formule (I) (signification de X: SCN, x = 1).

## Claims

**1.** Mixtures consisting of bis(silylorganyl) polysulfanes and silylorganyl thiocyanates of the general formula

$$(R^1R^2R^3SiR^4)_x\ X \qquad (I),$$

in which the meanings are as follows:

X: $S_n$ with n = a whole number from 2 to 20, particularly from 2 to 8, if x = 2

and

X: SCN if x = 1, (thiocyanatosilane),
$R^1$, $R^2$, $R^3$: the same or different from one another, branched or unbranched, alkyl and/or alkoxy groups with a chain length of 1 to 8 C atoms, with the proviso that $R^1$, $R^2$, $R^3$ denote an alkoxy group at least once, hydrogen or a monovalent aryl radical, particularly phenyl, tolyl, benzyl,
$R^4$: divalent alkylidene radical with a chain length of 1 to 8 C atoms, preferably 2 to 4 C atoms, or

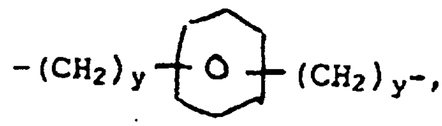

with y = 1 to 4

**2.** Mixtures according to claim 1, consisting of polysulfanes and thiocyanates according to formula (I), and in which $R^1$, $R^2$, $R^3$ and $R^4$ have the same meanings in both compounds, without having to be the same as one another.

**3.** Mixtures according to claims 1 or 2, consisting of polysulfanes and thiocyanates according to formula (I) in a molar ratio of 1:20 to 20:1.

**4.** Mixture consisting of bis(trialkoxysilylpropyl) disulfane and thiocyanatopropyltrialkoxysilane in a weight ratio of 60:40 to 90:10.

**5.** Mixtures according to claims 1 to 4, which additionally contain silica and/or carbon black in a quantity of 5 to 95 wt.%.

**6.** Process for the preparation of mixtures according to claims 1 to 4,
**characterised in that**
silylorganyl polysulfanes or mixtures thereof according to the general formula

$$(R^1\ R^2R^3SiR^4)_2S_n \qquad (II),$$

wherein $R^1$, $R^2$, $R^3$ and $R^4$, and n (exclluding n=2) have the same meaning as in formula (I),
are reacted with a nucleophilic compound of the general formula

$$M^+\ CN^- \qquad (III),$$

in which the meanings are as follows:

$M^+$ is an alkali metal cation, a substituted or unsubstituted ammonium ion or half of an alkaline earth or zinc ion, the compounds according to the general formula (III) being used in an equimolar relation to the number of sulfur atoms to be removed from the compound according to general formula (II), this reaction mixture is reacted with a compound of the general formula

$$R^1\ R^2\ R^3Si\text{-}R^4\text{-}Cl \qquad (IV),$$

wherein $R^1$, $R^2$, $R^3$ and $R^4$ have the same meaning as in formula (I), in a molar ratio of 0.05:1 to 1.0:1, based on the compound according to formula (III), at an elevated temperature under pressure and the mixture of the desired compounds is separated off after the reaction.

**7.** Process according to claim 6,
**characterised in that**
the compounds according to formulae (II), (III) and (IV) are mixed with one another in the desired molar ratios, reacted under pressure at an elevated temperature and the mixture of the desired compounds is separated off.

**8.** Process according to claim 6,
**characterised in that**
mixtures of

a) silylorganyl polysulfanes or mixtures thereof according to the general formula (II) and the compound
b)

$$M^+ CN^- \qquad (III),$$

and
c) an organosilicon compound of the general formula

$$R^1 R^2 R^3Si\text{-}R^4\text{-}Cl \qquad (IV),$$

are prepared, in which a : b : c are present in a molar ratio of (n-2): k(n-2): m(n-2), wherein $0<k\leq 1$; $k \cdot 0.05 \leq m \leq k$; $n > 2$, and otherwise the meanings are the same as above, these mixtures, present as a solution or suspension, are reacted at a temperature of 30 to 85°C, the reaction is then allowed to run at an elevated temperature and under pressure to form the desired mixture and this is isolated.

**9.** Process according to claims 6 or 7,
**characterised in that**
a tetrasulfane or a compound in which the statistical mean of n corresponds to four is used.

**10.** Process according to claims 6 or 7,
**characterised in that**
a polysulfane or a mixture of polysulfanes according to formula (II) is reacted to form the corresponding disulfane.

**11.** Process for the production of vulcanisable plastic and rubber mixtures reinforced with silica and, optionally, carbon black,
**characterised in that**
the mixtures according to claims 1 to 5 are mixed into the plastic and rubber mixtures.

**12.** Process according to claim 11,
**characterised in that**
a mixture consisting of bis(trialkoxysilylpropyl) disulfane and thiocyanatopropyltrialkoxysilane is used in a weight ratio of 60 : 40 to 90 : 10, preferably 75 : 25 to 85 : 15.

**13.** Process according to claim 11,
**characterised in that**
a disulfane according to formula (II) and/or a thiocyanatosilane according to formula (I) (meaning of X : SCN, x = 1) is added to the mixtures according to claims 1 to 5.